# EUROPÄISCHE PATENTSCHRIFT

(11) **EP 1 008 200 B1**
(45) Veröffentlichungstag und Bekanntmachung des Hinweises auf die Patenterteilung: **03.09.2003**
(21) Anmeldenummer: 97917303.6
(22) Anmeldetag: 10.04.1997
(51) Int. Cl.: H01M 8/04

(54) **VERFAHREN ZUM REGELN DER MEMBRANFEUCHTE EINER POLYMERELEKTROLYT-BRENNSTOFFZELLE UND POLYMERELEKTROLYT-BRENNSTOFFZELLE**
METHOD FOR REGULATING MEMBRANE MOISTURE OF A POLYMER ELECTROLYTE FUEL CELL, AND A POLYMER ELECTROLYTE FUEL CELL
PROCEDE POUR LE REGLAGE DE L'HUMIDITE DE LA MEMBRANE D'UNE PILE A COMBUSTIBLE A POLYELECTROLYTE ET PILE A COMBUSTIBLE A POLYELECTROLYTE Y RELATIVE

(43) Veröffentlichungstag der Anmeldung: 14.06.2000
(73) Patentinhaber: Proton Motor Fuel Cell GmbH, 82319 Starnberg (DE)
(72) Erfinder: KOSCHANY, Arthur, D-82343 Pöcking (DE)
(74) Vertreter: Klunker . Schmitt-Nilson . Hirsch
(86) Internationale Anmeldenummer: EP9701793
(87) Internationale Veröffentlichungsnummer: WO98045890

(56) Entgegenhaltungen:
- EP-A- 0 316 626
- EP-A- 0 743 693
- DE-A- 19 641 143
- DE-A- 19 648 995
- US-A- 5 468 574
- T.E.SPRINGER ET AL: "Polymer Electrolyte Fuel Cell Model" JOURNAL OF THE ELECTROCHEMICAL SOCIETY, Bd. 138, Nr. 8, August 1991, MANCHESTER, NEW HAMPSHIRE US, Seiten 2334-2342, XP002051330
- SARA D. FLINT ET AL: "Investigation of radiation-grafted PVDF-g-polystyrene-sulfonic-acid ion exchange membranes for use in hydrogen oxygen fuel cells" SOLID STATE IONICS - PROCEEDINGS OF THE EIGHT INTERNATIONAL CONFERENCE STOREFJELL, NORWAY, AUGUST 18-23, 1996, Bd. 97, Nr. 1-4, Mai 1997, AMSTERDAM NL, Seiten 299-307, XP002051333
- NGUYEN T V ET AL: "A WATER AND HEAT MANAGEMENT MODEL FOR PROTON-EXCHANGE-MEMBRANE FUELS CELLS" JOURNAL OF THE ELECTROCHEMICAL SOCIETY, Bd. 140, Nr. 8, 1.August 1993, Seiten 2178-2186, XP000403645
- THOMAS A. ZAWODZINSKI ET AL: "A Comparitive Study of Water Uptake By and Transport Through Ionomeric Fuel Cell Membranes" JOURNAL OF THE ELECTROCHEMICAL SOCIETY, Bd. 140, Nr. 7, Juli 1993, MANCHESTER, NEW HAMPSHIRE US, Seiten 1981-1985, XP002051331
- THOMAS A. ZAWODZINSKI ET AL: "Water Uptake by and Transport Through Nafion 117 Membranes" JOURNAL OF THE ELECTROCHEMICAL SOCIETY, Bd. 140, Nr. 4, April 1993, MANCHESTER, NEW HAMPSHIRE US, Seiten 1041-1047, XP002051332
- ZAHREDDINE C ET AL: "THE CONDUCTIVITY OF THE NOVEL PTFE POLYMER ELECTROLYTES" SOLID STATE IONICS, Bd. 58, Nr. 1/02, 1.November 1992, Seiten 185-187, XP000414571
- ROTA M ET AL: "IN-SITU MEMBRANE RESISTANCE MEASUREMENTS IN PEFC AS AN INDICATION OF INHOMOGENEOUS WATER DISTRIBUTION IN THE MEMBRANE" EXTENDED ABSTRACTS SPRING MEETING MAY 21/26 ST LOUIS MISSOURI US, Bd. 95/1, 1995, Seite 718 XP000551381
- BERNARDI D M: "WATER-BALANCE CALCULATIONS FOR SOLID-POLYMER-ELECTROLYTE FUEL CELLS" JOURNAL OF THE ELECTROCHEMICAL SOCIETY, Bd. 137, Nr. 11, November 1990, Seiten 3344-3350, XP000606168
- PATENT ABSTRACTS OF JAPAN vol. 013, no. 220 (E-762), 23.Mai 1989 -& JP 01 031353 A (SANYO ELECTRIC CO LTD), 1.Februar 1989,

## Beschreibung

Die Erfindung betrifft ein Verfahren zum Regeln der Membranfeuchte von Polymerelektrolyt-Brennstoffzellen eines Brennstoffzellenstapels und einen Polymerelektrolyt-Brennstoffzellenstapel mit einer Einrichtung zum Regeln der Membranfeuchte. Die Brennstoffzellen enthalten Feststoff-Polymer-Membranen als Elektrolyt, und verwenden als Brenngas bevorzugt Wasserstoff und als Oxidationsmittel Luft oder Sauerstoff unter niedrigem Druck.

Polymerelektrolyt-Brennstoffzellen, wie sie üblicherweise zur Erzeugung von elektrischem Strom verwendet werden, enthalten eine Anode, eine Kathode und eine dazwischen angeordnete Ionenaustauschermembran. Eine Mehrzahl von Brennstoffzellen bildet einen Brennstoffzellenstapel, wobei die einzelnen Brennstoffzellen durch als Stromsammler wirkende bipolare Platten voneinander getrennt werden. Zur Erzeugung von Elektrizität wird ein Brenngas, z.B. Wasserstoff, in den Anodenbereich und ein Oxidationsmittel, z.B. Luft oder Sauerstoff, in den Kathodenbereich eingebracht. Anode und Kathode enthalten in den mit der Polymerelektrolytmembran in Kontakt stehenden Bereichen jeweils eine Katalysatorschicht. In der Anodenkatalysatorschicht wird der Brennstoff unter Bildung von Kationen und freien Elektronen oxidiert, in der Kathodenkatalysatorschicht wird das Oxidationsmittel durch Aufnahme von Elektronen reduziert. Die Kationen wandern durch die Ionenaustauschermembran zur Kathode und reagieren mit dem reduzierten Oxidationsmittel, wobei, wenn Wasserstoff als Brenngas und Sauerstoff als Oxidationsmittel verwendet werden, Wasser entsteht. Bei der Reaktion von Brenngas und Oxidationsmittel werden beträchtliche Wärmemengen frei, die mittels Kühlung abgeführt werden müssen. Die Kühlung wurde bisher durch Kühlkanäle in den bipolaren Platten erreicht, die von deionisiertem Wasser durchströmt wurden.

Bei dieser Art von Kühlung ergeben sich enorme Materialprobleme, denn es werden typischerweise etwa 50 bis 300 bipolare Platten in Reihe geschaltet, das Kühlwasser verbindet also unterschiedliche Potentiale elektrisch miteinander. Die Folge sind Materialzersetzungen. Dementsprechend kommen als Werkstoff für die bipolaren Platten lediglich Graphit oder vergoldetes Metall in Frage.

Außerdem ist es erforderlich, die Polymermembran feucht zu halten, denn der Leitwert der Membran hängt stark von deren Wassergehalt ab. Um ein Austrocknen der Membran zu verhindern, war daher ein aufwendiges System zur Anfeuchtung der Reaktionsgase erforderlich.

Patent Abstracts of Japan, Band 013, Nr. 220 (E-762), 23. Mai 1989 & JP 01 031353 A (Sanyo Electric Co. Ltd.) offenbart ein Verfahren, die Verschlechterung einer Brennstoffzelle zu beseitigen. Der innere Brennstoffzellenwiderstand wird während des Zellbetriebs durch die "AC four-terminal"-Methode gemessen. Wenn der innere Brennstoffzellenwiderstand zunimmt, wird der Luftwassserdampf zugegeben, um die Membran mit Feuchtigkeit zu versorgen.

T.E. Springer et al: "Polymer Electrolyte Fuel Cell Model", Journal of the Electrochemical Society, Band 138, Nr. 8, August 1991, Manchester, New Hampshire, US, Seiten 2334-2342, offenbart die Ermittlung eines Maßes für die Feuchte der Membran einer Polymerelektrolyt-Brennstoffzelle ohne Verwendung einer Hilfselektrode. Dies geschieht durch Modulation der Zellspannung mit einem Wechselsignal und über eine Impedanzermittlung der Brennstoffzelle.

Die Ermittlung eines Durchschnittswerts eines Maßes für die Feuchte der Membranen mehrerer Brennstoffzellen eines Brennstoffzellenstapels und das Einstellen der optimalen Membranfeuchte in Abhängigkeit von dem ermittelten Durchschnittswert ist aus dem Stand der Technik nicht bekannt.

Aufgabe der Erfindung ist es, einen Polymerelektrolyt-Brennstoffzellenstapel bereitzustellen, wobei die Polymerelektrolytmembranen der Brennstoffzellen bei Betrieb stets den optimalen Feuchtegehalt aufweisen.

Aufgabe der Erfindung ist es außerdem, ein Verfahren bereitzustellen, das es ermöglicht, die Polymerelektrolytmembranen der Polymerelektrolyt-Brennstoffzellen bei Betrieb des Brennstoffzellenstapels auf einem optimalen Feuchtegehalt zu halten.

Die Aufgabe wird gelöst durch das Verfahren zur Regelung der Membranfeuchte von Polymerelektrolyt-Brennstoffzellen gemäß Anspruch 1 und den Brennstoffzellenstapel aus einer Mehrzahl von Polymerelektrolyt-Brennstoffzellen gemäß Anspruch 7.

Vorteilhafte Weiterbildungen der Erfindung sind in den entsprechenden Unteransprüchen angegeben.

Polymerelektrolytmembranen benötigen einen hohen Wassergehalt, um eine optimale Leitfähigkeit für H⁺-Ionen zu gewährleisten. Der Wassergehalt muß in der Regel durch Wasserzufuhr aufrechterhalten werden, da sonst die durch die Zelle strömenden Brenn- und Oxidationsmittel-Gasströme die Membrane austrocknen. Einer möglichen Austrocknung durch Zugabe eines Überschusses an Wasser zu begegnen, ist jedoch nicht sinnvoll, da Wasser in zu großen Mengen zum Fluten der Elektroden führt, d.h. die Poren der Elektroden verstopft. Ein einfaches Feststellen und Regeln der jeweils benötigten Wassermenge war bisher nicht möglich.

In den Zeichnungen zeigen:
- Fig. 1: eine bevorzugte Ausführungsform einer Brennstoffzelle, eines erfindungsgemäßen Brennstoffzellenstapels
- Fig. 2: eine Schaltung zur Messung der Impedanz von Brennstoffzellen eines Brennstoffzellenstapels
- Fig. 3: die Abhängigkeit der Leitfähigkeit einer Nafion-Membran vom Wassergehalt der Membran,
- Fig. 4a: eine schematische Darstellung der Steuerung des Wasserzusatzes,
- Fig. 4b: eine schematische Darstellung der Steuerung der Veränderung der Arbeitsbedingungen.

Polymerelektrolyt-Brennstoffzellen gemäß der Erfindung verwenden Luft oder Sauerstoff bei geringem Überdruck als Oxidationsmittel. Bevorzugt ist ein Überdruck von weniger als 2 bar, besonders bevorzugt von weniger als 0,5 bar. Die erforderliche Druckdifferenz kann auch durch Saugen erzielt werden. Als Brenngas wird bevorzugt Wasserstoff verwendet, aber auch die Verwendung anderer Brenngase ist prinzipiell möglich. Als Polymerelektrolytmembran wird bevorzugt Nation ® eingesetzt. Den einzelnen Brennstoffzellen eines Stapels wird Wasserstoff zugeführt und über Gaskanäle im Anodenbereich verteilt. Gleichzeitig wird Luft zugeführt und über Gaskanäle im Kathodenbereich verteilt. Der Wasserstoff wandert zur Anodenkatalysatorschicht und bildet dort Kationen, welche durch den Elektrolyten, eine Protonenaustauschmembran, zur Kathode wandern. An der Kathode wandert Sauerstoff zur Kathodenkatalysatorschicht und wird dort reduziert. Bei der Reaktion mit den Kationen entsteht als Reaktionsprodukt Wasser. Durch die Reaktionswärme verdampft das gebildete Wasser, was eine gewisse Kühlung zur Folge hat. Der Kühleffekt ist jedoch zum einen nicht ausreichend, zum anderen verarmt die Membran im Laufe des Betriebs der Brennstoffzelle zunehmend an Feuchtigkeit.

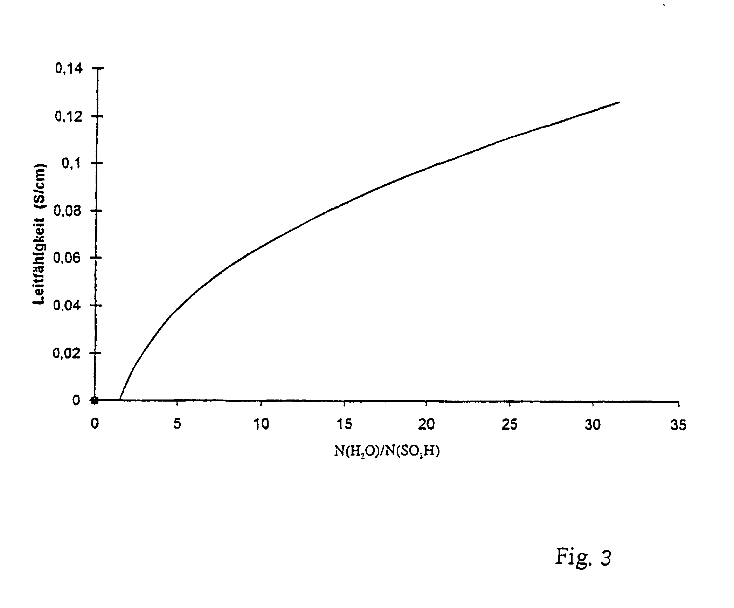

Wie aus Fig. 3 für Nafion^{•} NE 105 (30°C) ersichtlich ist, nimmt die Leitfähigkeit ionenleitender Membranen mit dem H₂O-Gehalt zu. N(H₂O)/N(SO₃H) bezeichnet die Anzahl der Wassermoleküle pro Sulfonsäurerest der Membran.

Eine Verringerung des Feuchtigkeitsgehalts der festen Polymerelektrolytmembran einer Brennstoffzelle hat daher zur Folge, daß ihr innerer Widerstand ansteigt, das heißt ihr Leitwert sinkt. Der Leitwert der Membran hängt extrem von ihrem Wassergehalt ab. Wesentlich für eine effiziente Arbeitsweise einer Polymerelektrolyt-Brennstoffzelle ist es daher, daß die Polymerelektrolytmembran stets die den jeweiligen Arbeitsbedingungen (Temperatur, Last, Luftzahl) entsprechende optimale Feuchte aufweist.

Zur Aufrechterhaltung der optimalen Feuchte kann erfindungsgemäß während des Betriebs der Brennstoffzellen, vorzugsweise regelmäßig oder kontinuierlich, bestimmt werden, ob die Membran optimal befeuchtet ist oder ob Maßnahmen zum Einstellen der optimalen Membranfeuchte erforderlich sind.

Das Einstellen der optimalen Membranfeuchte kann beispielweise durch Zugabe der erforderlichen Wassermenge in flüssigem oder gasförmigem Zustand erfolgen. Bevorzugt wird das Wasser einem der Reaktionsgase oder beiden Reaktionsgasen zugesetzt. Weitere Möglichkeiten, die Membran auf einem optimalen Feuchtegehalt zu halten, bestehen darin, die Arbeitsbedingungen an den ermittelten Feuchtegehalt anzupassen. Die dazu vor allem in Frage kommenden Arbeitsbedingungen sind Elektrodentemperaturen, Volumenströme der Reaktionsgase und Last der Brennstoffzellen. Erfindungsgemäß erfolgt das Einstellen der optimalen Membranfeuchte daher bevorzugt folgendermaßen: Nach der Ermittlung, in welchem Ausmaß die tatsächlicne Feuchte von der Sollfeuchte abweicht, wird eine bestimmte Menge Wasser eingespeist oder die Temperatur mindestens einer der Elektroden oder der Volumenstrom von Brenngas und/oder Oxidationsmittel dergestalt verändert, daß die tatsächliche Feuchte der Membran der bei den veränderten Arbeitsbedingungen optimalen Feuchte der Membran entspricht. Auch eine Veränderung der Last ist möglich, um zu erreichen, daß die optimale Membranfeuchte im wesentlichen in Übereinstimmung mit der tatsächlichen Membranfeuchre gebracht wird. Erfindungsgemäß können auch mehrere der obengenannten Maßnahmen kombiniert werden, um das Einstellen der optimalen Membranfeuchte zu bewirken.

Im folgenden wird die Erfindung anhand der Regelung des Wasserzusatzes beschrieben.

Grundsätzlich kann die Menge des Wasserzusatzes stark variieren. Sie hängt von den jeweiligen Arbeitsbedingungen der Brennstoffzellen ab, und sie hängt insbesondere auch von der Art der Kühlung der Brennstoffzelle ab. Häufig wird Brennstoffzellen zur Kühlung Wasser zugeführt, das, abhängig von der Konstruktion der Brennstoffzellen, in gewissem Ausmaß auch die Membran mitbefeuchtet. Dann muß in der Regel weniger zusätzliches Wasser zugeführt werden als bei Zellen mit beispielsweise ausschließlich Luftkühlung.

Der Leitwert der Membran hängt von ihrem Wassergehalt ab. Während des Betriebs einer Brennstoffzelle kann der Leitwert der Membran allerdings nicht direkt gemessen werden. Erfindungsgemäß wird ein Maß für die Feuchte der Membran, vorzugsweise die Impedanz der Brennstoffzelle (Betrag der Impedanz oder besonders bevorzugt Realteil der Impedanz), ermittelt. Da der Leitwert der Membran eine stetige, monotone Funktion dieser Größen ist, kann die erforderliche Wassermenge auch auf der Grundlage der Impedanz geregelt werden.

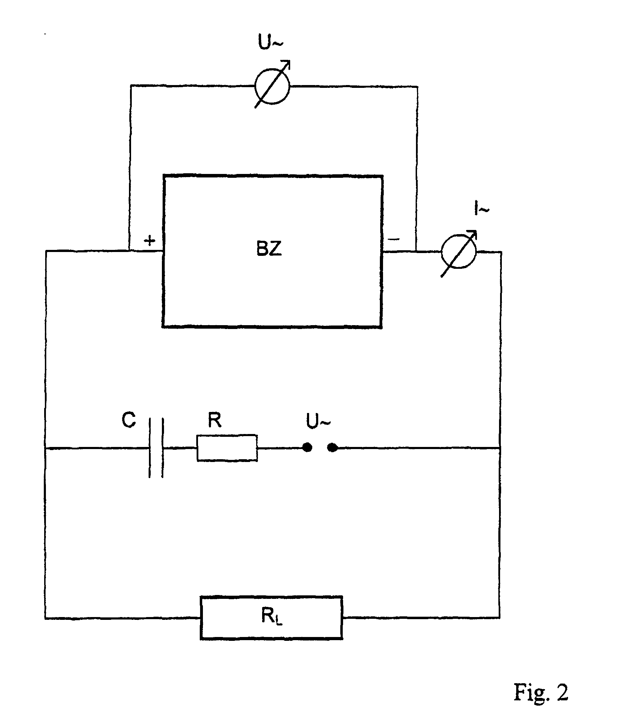

Eine mögliche Schaltung zur Messung der Impedanz von Brennstoffzellen zeigt Fig. 2. Ermittelt wird ein Durchschnittswet eines Maßes für die Fenchte der Membranen mehrerer Brennstoffzellen (BZ) eines Stapels.

Die erfindungsgemäße Bestimmung des Maßes für die Feuchte der Membranen erfordert keine Hilfselektroden, d.h., sie bedient sich der Arbeitselektroden. Ein Eingriff in die Zellen selbst ist nicht erforderlich.

Die direkte Messung des Leitwerts und damit des Feuchtegebalts der Polymerelektrolytmembranen der Brennstoffzellen mittels Bestimmung der Impedanz erfolgt durch Modulation der Zellspannung mit einem Wechselsignal mit einer Frequenz von 1 bis 20 kHz. Bei einem Brennstoffzellenstapel wird erfindungsgemäß der durchschnittliche Feuchtegehalt mehrerer Membranen gemessen. Der Quotient aus Wechselspannung und der resultierenden Stromantwort ist ein Maß für die Feuchte. In Fig. 2 stellt BZ eine Mehrzahl von Brennstoffzellen und R_{L} den Lastwiderstand dar. Dem Lastwiderstand parallel geschaltet ist eine Anordnung aus Kondensator C, Widerstand R und Wechselspannungsquelle U, die geeignet ist, kleine Wechselspannungen (Größenordnung von etwa 10 mV) und große Ströme (Größenordnung von etwa 10 A) zu erzeugen. Die Spannung der Brennstoffzellen wird durch das Wechselsignal (etwa 1-20 kHz) der Wechselspannungsquelle moduliert. Der Wechselspannungsanteil U bewirkt eine Überlagerung des Brennstoffzellenstroms mit einem Wechselstrom I. Der Quotient aus Wechselspannung und Wechselstrom ist ein Maß für die Impedanz der Brennstoffzellen und damit ein Maß für die Feuchte der Polymerelektrolytmembranen, bzw. für die erforderliche Wassermenge, die zugeführt werden muß.

Der Betrag der Impedanz einer Brennstoffzelle hängt allerdings, außer von der Leitfähigkeit der Membran, von weiteren Bestimmungsgrößen ab, nämlich von der Größe der Katalysatoroberfläche, die mit der Membran in Berührung steht, vom Ohmschen Widerstand der Elektroden und der Vergiftung der Membran durch Fremdionen. Diese Größen unterliegen im Laufe der Lebensdauer einer Brennstoffzelle einer gewissen Veränderung, wobei die Abweichungen durch Veränderung des Ohmschen Widerstands der Elektroden und durch Vergiftung der Membran durch Fremdionen in der Regel vernachlässigbar gering sind. Im Laufe der Lebensdauer einer Brennstoffzelle kann also der Betrag der Impedanz, der unter gegebenen Betriebsbedingungen der optimalen Membranfeuchte entspricht (Sollwert des Betrags der Impedanz), variieren. Daher sollte der einzuhaltende Sollwert des Betrags der Impedanz im Zuge anfallender Wartungsarbeiten jeweils neu eingestellt werden. Der neue Sollwert wird dabei durch Maximierung der Leistung der Brennstoffzelle bestimmt. Während des Betriebes der Brennstoffzelle kann der optimale Sollwert alternativ durch Fuzzy logic oder ähnliche, dem Fachmann geläufige Methoden, entsprechend den veränderten Verhältnissen neu angepaßt werden.

Ein von der Katalysatoroberfläche (deren Veränderung im wesentlichen verantwortlich ist für die Veränderung des Sollwerts der Impedanz) weitgehend unabhängiges Maß für die Leitfähigkeit der Membrane erhält man, wenn neben dem Betrag der Impedanz auch ihr Phasenwinkel in Betracht gezogen wird. Betrachtet man den hieraus elektronisch bestimmten Realteil der Impedanz als Regelgröße, so kann sogar über die gesamte Lebensdauer der Brennstoffzellen ein einziger Sollwert verwendet werden.

Während des Betriebs der Brennstoffzellen kann die Impedanz (Betrag oder Realteil) kontinuierlich oder in regelmäßigen Abständen gemessen werden. Errechnet sich aus der Messung ein zu geringer Leitwert der Membranen, so wird dem System Wasser zugeführt, beispielsweise durch auf übliche Weise elektronisch gesteuertes Öffnen von Wassereinlaßventilen, bis der Sollwert der Impedanz wieder erreicht ist, oder es wird eine oder mehrere der Arbeitsbedingungen entsprechend variiert.

Bei Brennstoffzellen-Stapeln mit einer Mehrzahl an Brennstoffzellen kann man den Betrag oder den Realteil der Impedanz als Durchschnittswerte für eine Mehrzahl von Zellen des Stapels oder für alle Zellen des Stapels gemeinsam bestimmen und den erforderlichen Wasserzusatz danach richten.

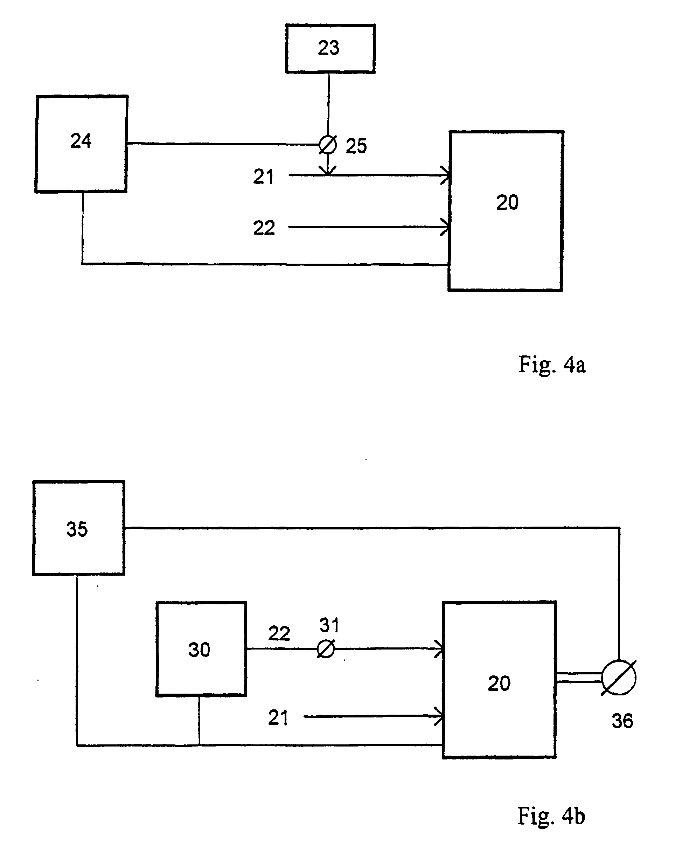

Fig. 4a zeigt schematisch ein spezielles Beispiel für die Steuerung der Einbringung von Membranbefeuchtungswasser in einen Brennstoffzellenstapel 20, der mit Wasserstoff 21 und Luft 22 betrieben wird. Wird eine zu geringe Membranfeuchte gemessen, wird über das Ventil 25 Wasser aus dem Wasservorratsbehälter 23 in den Wasserstoffstrom 21 eingespeist, bis die erforderliche Membranfeuchte erreicht ist. Öffnen und Schließen des Ventils 25 erfolgt durch das Steuergerät 24.

Fig. 4b zeigt schematisch ein spezielles Beispiel für die Steuerung der Veränderung von Arbeitsbedingungen (Luft-Volumenstrom und Last) bei einem Brennstoffzellenstapel 20, der mit Wasserstoff 21 und Luft 22 betrieben wird. Wird ein nicht optimaler Membranfeuchtigkeitswert gemessen, steuert das Steuergerät 30 je nach Bedarf das stärkere Öffnen oder Schließen des Ventils 31, bis der erforderliche Luft-Volumenstrom erreicht ist. Alternativ kann auch der Wasserstoff-Volumenstrom 21 oder beide Ströme verändert werden. Insbesondere bei luftgekühlten Brennstoffzellen ist über die Steuerung des Luftstroms 22 auch die Steuerung der Temperatur möglich. Eine weitere Alternative ergibt sich in einer luftstromunabhängigen Variation der Temperatur der Brennstoffzelle (z. B. Bei Wasserkühlung), die ebenfalls eine Variation des Feuchtegehalts der Membran bewirkt. Eine weitere Möglichket ist die Steuerung der Last 36 mittels Steuergerät 35.

Unabhängig von der Art und Weise der Bestimmung des optimalen Wassergehalts der Membranen und der Regelung der Wassereinspeisung ist es erfindungsgemäß möglich, Membranbefeuchtungswasser gleichzeitig zur Kühlung der Brennstoffzellen zu verwenden und damit eine ausreichende Kühlung zu gewährleisten. Dies wird erfindungsgemäß dadurch erreicht, daß bei Brennstoffzellen, die wie oben ausgeführt konzipiert sind, in die Gaskanäle für die Verbrennungsluft ionenfreies Wasser in flüssiger Form unmittelbar eingebracht wird. Alternativ kann das Wasser auch unmittelbar in die Gaskanäle für das Brenngas eingebracht werden.

Eine bewährte Lösung ist das Einbringen von Wasser sowohl im Kathoden- als auch im Anodenbereich, insbesondere bei Betriebsbedingungen, die ein starkes Austrocknen der Membran bewirken.

Das flüssige Wasser verdampft in den heißen Brennstoffzellen und bewirkt durch die stattfindende Phasenumwandlung eine effiziente Kühlung der Zellen. Außerdem dringt es in die Polymerelektrolytmembranen ein und hält sie feucht.

Die einfachste Möglichkeit, die erforderliche Wassermenge dem Luftstrom bzw. dem Luft- undloder Wasserstoffstrom beizufügen, besteht darin, das Wasser mittels einer Dosierpumpe in zahlreichen dünnen Leitungen, z.B. Kapillaren, in die Gaskanäle einzubringen. Dabei findet keine nennenswerte Durchmischung des Wassers mit der Luft bzw. dem Brenngas statt, die für die Verdampfung zur Verfügung stehende freie Wasseroberfläche ist also relativ gering.

Eine erheblich größere freie Wasseroberfläche und damit eine raschere Befeuchtung der Membranen und eine effizientere Kühlung erreicht man, wenn man die erforderliche Wassermenge den Reaktionsgasströmen in durchmischter Form, also als Aerosol beifügt. Das Wasser in Luft Aerosol und gegebenenfalls das Wasser in Brenngas Aerosol enthalten Wasser in Form von 2 bis 20 µm großen Tröpfchen, die eine rasche Verdunstung oder Verdampfung gewährleisten. Das Aerosol läßt sich beispielsweise mit Hilfe von Ultraschall-Zerstäubern oder Düsen herstellen. Die einfachste und gleichzeitig am wenigsten energieaufwendige Erzeugung des Aerosols erfolgt mittels Ultraschall-Zerstäubern bei Frequenzen von mindestens 100 kHz.

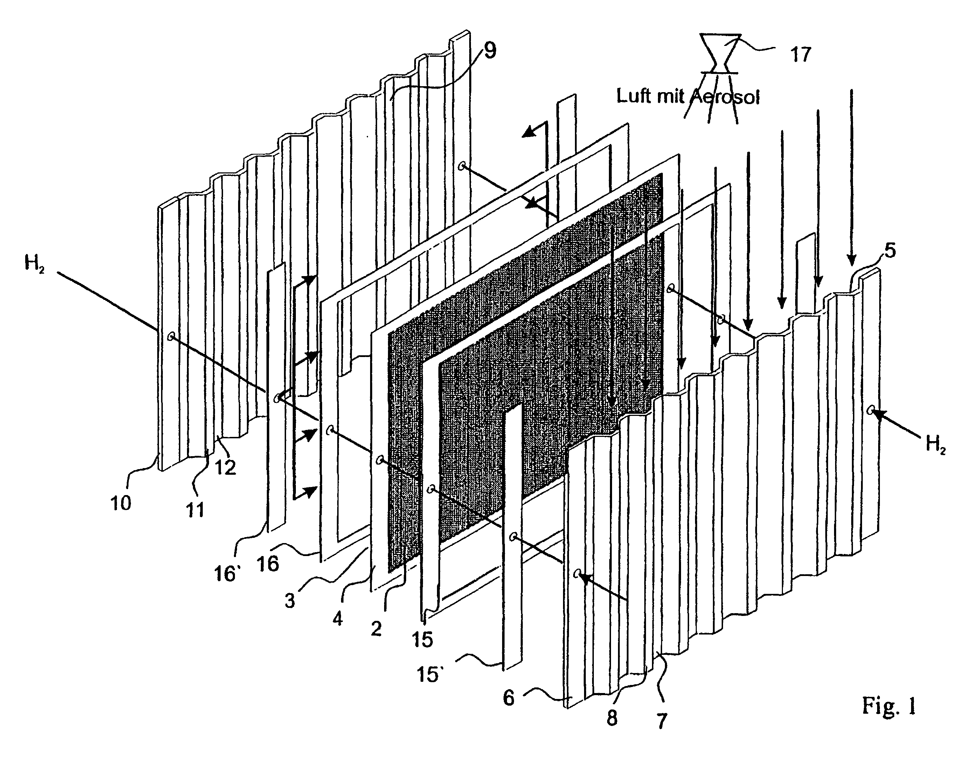

Eine besonders vorteilhafte Ausführungsform der Erfindung stellt die Ausgestaltung der Kanäle zur Aufnahme von Wasser in Luft Aerosol bzw. Wasser-in-Brenngas-Aerosol dar, wie sie in Fig. 1 gezeigt sind. In einem Brennstoffzellenstapel wird jede Brennstoffzelle anodenseitig und kathodenseitig jeweils von einer bipolaren Platte 10, 6 begrenzt. Die anodenseitige bipolare Platte ist gleichzeitig die kathodenseitige bipolare Platte einer Nachbarzelle und die kathodenseitige bipolare Platte gleichzeitig die anodenseitige bipolare Platte der anderen Nachbarzelle.

Die bipolare Platte besitzt zumindest in einem Teilbereich Wellblechstruktur, sie weist also im Wechsel Erhebungen und Vertiefungen auf. Eine Oberfläche der bipolaren Platte 6 berührt mit ihren Erhebungen 7 den Kathodenbereich 2 der Brennstoffzelle, wodurch die jeweils zwischen zwei benachbarten Erhebungen gelegenen Vertiefungen 8 mit dem Kathodenbereich Kanäle 5 zur Aufnahme von Wasser in Luft Aerosol bilden. In gleicher Weise berührt die bipolare Platte 10 mit einer Oberfläche den Anodenbereich 3 der Zelle, so daß die jeweils zwischen zwei benachbarten anodenseitigen Erhebungen 11 gelegenen Vertiefungen 12 mit dem Anodenbereich 3 ebenfalls Kanäle 9 bilden. Diese können zur Aufnahme von Wasser in Brenngas Aerosol dienen.

Bei der in Fig. 1 gezeigten Ausführungsform wird Wasserstoff als Brenngas senkrecht zur Plauenfläche durch Bohrungen eingespeist. Der Wasserstoff tritt zunächst in den mit der Einspeiseöffnuhg in Verbingung stehenden Kanal 9 ein und diffundiert bzw. strömt von dort aus in den benachbarten porösen Anodenbereich. Von hier aus diffundiert der Wasserstoff zum Teil zur Anodenkatalysatorschicht, zum Teil in der Ebene des Anodenbereichs in weitere Gaskanäle 9. Wegen der hervorragenden Diffusionseigenschaften von Wasserstoff wird dabei problemlos der gesamre Anodenbereich gleichmäßig mit Wasserstoff versorgt.

Soll zusammen mit dem Brenngas auch Kühlwasser eingespeist werden, ist es in der Regel vorteilhafter, die gleiche Art der Zuführung wie im Kathodenbereich zu wählen, also Brennstoff und Wasser in jeden einzelnen Kanal 9 einzuspeisen. Wegen der im Vergleich zu Wasserstoff schlechten Diffusionseigenschaften von Wasser würde sonst nur wenig Wasser in die Anode eindringen, der Kühleffekt wäre also gering.

Die Konstruktion weist keinerlei separate Kühlkanäle auf. Ein besonderer Vorteil liegt insbesondere darin, daß der Weg des Aerosols durch die Kanäle 5 der Zelle eine Gerade darstellt. Die Wellblechstruktur der bipolaren Platte mit geraden Gaswegen ermöglicht es, Niederschläge des Aerosols zu minimieren und die notwendigen Volumenströme bei kleinem Druckabfall zu leiten.

Es kommt nicht, wie bei porösen Platten häufig der Fall, zu einem Fluten und Verstopfen der Wasserleitungswege durch Wassertröpfchen. Außerdem ist die "Wellblechplatte" fertigungstechnisch sehr einfach und preisgünstig herstellbar.

Anoden- und Kathodenbereich sind jeweils als einen geeigneten Katalysator tragende Diffusionsschichten ausgebildet, die an den entgegengesetzten Seiten der Polymerelektrolytmembran 4 angeordnet sind.

Luftdichtungen 15, 15' und Wasserstoffdichtungen 16, 16' schließen die Zelle gasdicht ab.

Um die Verweilzeit des Wassers in der Zelle zu erhöhen und dadurch eine vollständige Verdunstung zu ermöglichen, können die Wandungen der Gaskanäle 5 und/oder der Gaskanäle 9 mit einer hydrophilen saugfähigen Schicht überzogen werden, beispielsweise mit Filz. Die hydrophile, saugfähige Schicht verteilt die eingebrachte Wassermenge besonders gleichmäßig und hält sie bis zur Verdunstung fest.

Die zur Erreichung einer optimalen Membranbefeuchtung erforderliche Wassermenge kann, wie vorstehend ausgeführt, auf elektronischem Wege bestimmt und geregelt werden. Die in die Brennstoffzellen eingebrachte Wassermenge kann zwei Aufgaben erfüllen: Kühlung der Zellen und Befeuchtung der Membranen. Für eine Regelung der notwendigen Wassermenge wird jedoch nur die Einstellung der geeigneten Membranfeuchte berücksichtigt. In Abhängigkeit von den Parametern Temperatur, Last, Luftzahl u.ä. wird die optimale Membranfeuchte und damit der optimale Leitwert der Membran experimentell bestimmt. Der Wasserzusatz variiert in Abhängigkeit von dem zu erreichenden Leitwert. Die Zelltemperatur variiert in Abhängigkeit von den Betriebsbedingungen in weiten Grenzen. Solange ausreichend Wasser eingebracht wird, um eine optimale Membranfeuchte sicherzustellen, wird jedoch auch eine ausreichende Kühlwirkung gewährleistet. Die Kühlung kann jedoch auch anders sichergestellt werden, beispielsweise durch ausreichende Luftströmung.

Um bei einem Brennstoffzellenstapel den Feuchtegehalt der Reaktionsgase und ihre Temperatur längs der Strömungsrichtung möglichst konstant zu halten, kann man das Reaktionsgas, insbesondere die Luft, den Zellstapel mehrmals passieren lassen. Die geschieht durch Rückführung des die Brennstoffzellen verlassenden Luft/Wasser-Gemisches bzw. des die Brennstoffzellen verlassenden Brenngas/Wasser-Gemisches in den entsprechenden Ansaugstrom.

Erfindungsgemäß kann also bei Polymerelektrolyt-Brennstoffzellen durch Einbringen von ionenfreiem Wasser in flüssiger Form direkt in die Gaskanäle der Verbrennungsluft und/oder des Brenngases gleichzeitig die Einhaltung einer optimalen Membranfeuchte und damit eines optimalen Leitwerts der Membran sowie eine ausreichende Kühlung der Brennstoffzellen gewährleistet werden.

## Patentansprüche

1. Verfahren zur Regelung der Membranfeuchte von Polymerelektrolyt-Brennstoffzellen eines Brennstoffzellenstapels,
**dadurch gekennzeichnet,**
**daß** ein Durchschnittswert eines Maßes für die Feuchte der Membranen (4) mehrerer Brennstoffzellen des Brennstoffzellenstapels ohne Verwendung einer Hilfselektrode elektronisch ermittelt wird und daß in Abhängigkeit von dem ermittelten Durchschnittswert der Membranfeuchte das Einstellen der optimalen Membranfeuchte geregelt wird.

2. Verfahren nach Anspruch 1,
**dadurch gekennzeichnet,**
**daß** ein Durchschnittswert eines Maßes für die Feuchte der Membranen aller Brennstoffzellen des Brennstoffzellenstapels elektronisch ermittelt wird.

3. Verfahren nach Anspruch 1 oder 2,
**dadurch gekennzeichnet,**
**daß** das Ermitteln durch Modulation der Spannung der mehreren Brennstoffzellen oder aller Brennstoffzellen mit einem Wechselsignal erfolgt.

4. Verfahren nach Anspruch 3,
**dadurch gekennzeichnet,**
**daß** eine Impedanzermittlung der Brennstoffzellen (1) erfolgt.

5. Verfahren nach einem der Ansprüche 1 bis 4,
**dadurch gekennzeichnet,**
**daß** das Einstellen der optimalen Membranfeuchte durch Einbringen der erforderlichen Wassermenge und/oder Veränderung der Elektrodentemperatur und/oder Veränderung des Volumenstroms mindestens eines der Reaktionsgase und/oder Veränderung der Last erfolgt.

6. Verfahren nach einem der Ansprüche 1 bis 5,
**dadurch gekennzeichnet,**
**daß** zur gleichzeitigen Kühlung der Brennstoffzellen und Befeuchtung der Polymerelektrolytmembranen eine erforderliche Wassermenge in flüssiger Form unmittelbar in die Gaskanäle der Luft und/oder die Gaskanäle des Brenngases eingebracht wird.

7. Brennstoffzellenstapel mit einer Mehrzahl von Polymerelektrolyt-Brennstoffzellen (1) mit einem Anodenbereich (3), einem Kathodenbereich (2), einer dazwischen angeordneten Polymerelektrolytmembran (4), einer Einrichtung zum Zuführen von Luft als Oxidationsmittel zum Kathodenbereich, Gaskanälen (5) zum Verteilen der Luft im Kathodenbereich, einer Einrichtung zum Zuführen von Brenngas zum Anodenbereich, und Gaskanälen (9) zum Verteilen des Brenngases im Anodenbereich,
**gekennzeichnet durch**
eine elektronische Einrichtung zum Ermitteln eines Durchschnittswertes eines Maßes für die Feuchte der Membranen mehrerer Brennstoffzellen des Brennstoffzellenstapels ohne Verwendung einer Hilfselektrode und eine Einrichtung zum Regeln des Einstellens der optimalen Membranfeuchte in Abhängigkeit von dem ermittelten Durchschnittswert der Mernbranfeuchte.

8. Brennstoffzellenstapel nach Anspruch 7,
**gekennzeichnet durch**
eine elektronische Einrichtung zum Ermitteln eines Durchschnittswertes eines Maßes für die Feuchte der Membranen aller Brennstoffzellen des Brennstoffzellenstapels.

9. Brennstoffzellenstapel nach Anspruch 7 oder 8,
**dadurch gekennzeichnet,**
**daß** die elektronische Einrichtung für das Ermitteln durch Modulation der Spannung der mehreren Brennstoffzellen oder aller Brennstoffzellen mit einem Wechselsignal ausgebildet ist.

10. Brennstoffzellenstapel nach Anspruch 9,
**dadurch gekennzeichnet,**
**daß** die elektronische Einrichtung für Impedanzermittlung der Brennstoffzellen (1) ausgebildet ist.

11. Brennstoffzellenstapel nach einem der Ansprüche 7 bis 10,
**dadurch gekennzeichnet,**
**daß** die Einrichtung zum Regeln des Einstellens der optimalen Membranfeuchte als Einrichtung zum Regeln des Einbringens der erforderlichen Wassermenge und/oder zur Veränderung der Elektrodentemperatur und/oder zur Veränderung des Volumenstroms mindestens eines der Reaktionsgase und/oder zur Veränderung der Last ausgebildet ist.

12. Brennstoffzellenstapel nach einem der Ansprüche 7 bis 11,
außerdem **gekennzeichnet durch**
eine Einrichtung zum Einbringen von Wasser in flüssiger Form unmittelbar in die Gaskanäle (5) der Luft im Kathodenbereich und/oder die Gaskanäle (9) des Brenngases im Anodenbereich, sowie **durch** die Zellen anodenseitig und/oder kathodenseitig begrenzende bipolare Platten (10, 6).

## Claims

1. A method of regulating the membrane moisture of polymer electrolyte fuel cells of a fuel cell stack,
**characterized in that** an average value of a measure of the moisture of the membranes (4) of a plurality of fuel cells of the fuel cell stack is ascertained electronically without utilization of an auxiliary electrode, and **in that** setting of the optimum membrane moisture is regulated as a function of the average value ascertained of the membrane moisture.

2. The method of claim 1,
**characterized in that** an average value of a measure of the moisture of the membranes of all fuel cells of the fuel cell stack is ascertained electronically.

3. The method of claim 1 or 2,
**characterized in that** said ascertaining is carried out by modulation of the voltage of the plurality of fuel cells or all fuel cells with an alternating signal.

4. The method of claim 3,
**characterized in that** the impedance of the fuel cells (1) is ascertained.

5. The method of any of claims 1 to 4,
**characterized in that** said setting of the optimum membrane moisture is carried out by introducing the required amount of water and/or changing the electrode temperature and/or changing the volume flow of at least one of the reaction gases and/or changing the load.

6. The method of any of claims 1 to 5,
**characterized in that**, for simultaneously cooling the fuel cells and humidifying the polymer electrolyte membranes, a required amount of water in liquid form is introduced directly into the gas channels of the air and/or the gas channels of the fuel gas.

7. A fuel cell stack comprising a plurality of polymer electrolyte fuel cells (1) having an anode region (3), a cathode region (2), a polymer electrolyte membrane (4) disposed therebetween, a means for supplying air as oxidizing agent to the cathode region, gas channels (5) for distributing the air in the cathode region, a means for supplying fuel gas to the anode region, and gas channels (9) for distributing the fuel, gas in the anode region,
**characterized by** an electronic means for ascertaining an average value of a measure of the moisture of the membranes of a plurality of fuel cells of the fuel cell stack without utilization of an auxiliary electrode, and a means for regulating the setting of the optimum membrane moisture as a function of the average value ascertained of the membrane moisture.

8. The fuel cell stack of claim 7,
**characterized by** an electronic means for ascertaining an average value of a measure of the moisture of the membranes of all fuel cells of the fuel cell stack.

9. The fuel cell stack of claim 7 or 8,
**characterized in that** the electronic means is designed for ascertaining by modulation of the voltage of the plurality of fuel cells or all fuel cells with an alternating signal.

10. The fuel cell stack of claim 9,
**characterized in that** said electronic means is designed for ascertaining the impedance of the fuel cells (1).

11. The fuel cell stack of any of claims 7 to 10,
**characterized in that** the means for regulating the setting of the optimum membrane moisture is designed as a means for regulating the introduction of the required amount of water and/or changing the electrode temperature and/or changing the volume flow of at least one of the reaction gases and/or for changing the load.

12. The fuel cell stack of any of claims 7 to 11,
furthermore **characterized by** a means for introducing water in liquid form directly into the gas channels (5) of the air in the cathode region and/or the gas channels (9) of the fuel gas in the anode region, and by bipolar plates (10, 6) confining the cells on the anode side and/or on the cathode side.

## Revendications

1. Procédé de régulation de l'humidité de la membrane d'éléments à électrolyte polymère d'une pile à combustible, **caractérisé en ce qu'**une valeur moyenne d'une mesure pour l'humidité des membranes (4) de plusieurs éléments de la pile à combustible est détectée électroniquement sans utilisation d'une électrode auxiliaire et **en ce qu'**en fonction de la valeur moyenne détectée de l'humidité de la membrane, le réglage de l'humidité optimale de la membrane est régulé.

2. Procédé selon la revendication 1, **caractérisé en ce qu'**une valeur moyenne d'une mesure pour l'humidité des membranes de tous les éléments de la pile à combustible est détectée électroniquement.

3. Procédé selon la revendication 1 ou 2,
**caractérisé en ce que** la détection s'effectue par modulation de la tension de plusieurs éléments ou de la totalité des éléments avec un signal alternatif.

4. Procédé selon la revendication 3, **caractérisé en ce qu'**une détection d'impédance des éléments (1) est effectuée.

5. Procédé selon une des revendications 1 à 4, **caractérisé en ce que** le réglage de l'humidité optimale de la membrane s'effectue par apport de la quantité d'eau nécessaire et/ou modification de la température des électrodes et/ou modification du courant en volume au moins d'un des gaz de réaction et/ou modification de la charge.

6. Procédé selon une des revendications 1 à 5, **caractérisé en ce qu'**en vue du refroidissement simultané des éléments et humidification des membranes à électrolyte polymère, une quantité nécessaire d'eau sous forme liquide est amenée directement dans les canaux de gaz de l'air et/ou les canaux de gaz du gaz combustible.

7. Pile à combustible comprenant une pluralité d'éléments à électrolyte polymère (1) avec une région d'anode (3), une région de cathode (2), une membrane à électrolyte polymère (4) interposée, un dispositif d'amenée d'air en tant que moyen d'oxydation à la région de cathode, des canaux de gaz (5) en vue de la répartition de l'air dans la région de cathode, un dispositif d'amenée de gaz combustible à la région d'anode, et des canaux de gaz (9) en vue de la répartition du gaz combustible dans la région d'anode, **caractérisée par** un dispositif électronique en vue de la détection d'une valeur moyenne d'une mesure pour l'humidité des membranes de plusieurs éléments de la pile à combustible sans utilisation d'une électrode auxiliaire et un dispositif de régulation du réglage de l'humidité optimale de membrane en fonction de la valeur moyenne détectée de l'humidité de membrane.

8. Plie à combustible selon la revendication 7, **caractérisée par** un dispositif électronique de détection d'une valeur moyenne d'une mesure pour l'humidité des membranes de tous les éléments de la pile à combustible.

9. Pile à combustible selon la revendication 7 ou 8, **caractérisée en ce que** le dispositif électronique est réalisé pour la détection par modulation de la tension de plusieurs éléments ou de la totalité des éléments avec un signal alternatif.

10. , Pile à combustible selon la revendication 9, **caractérisée en ce que** le dispositif électronique est réalisé pour une détection d'impédance des éléments de la pile à combustible (1).

11. Pile à combustible selon une des revendication 7 à 10, **caractérisée en ce que** le dispositif de régulation du réglage de l'humidité optimale de la membrane est réalisé en tant que dispositif de régulation de l'apport de la quantité d'eau nécessaire et/ou de la variation de la température d'électrodes et/ou de la variation du courant en volume au moins d'un des gaz de réaction et/ou en vue de la variation de la charge.

12. Pile à combustible selon une des revendications 7 à 11, **caractérisée en outre par** un dispositif d'apport d'eau sous forme liquide directement dans les canaux de gaz (5) de l'air dans la région de cathode et/ou les canaux (9) du gaz combustible dans la région d'anode, ainsi que par des plaques bipolaires (10, 6) limitant les éléments côté anode et/ou côté cathode.
